(19) Europäisches Patentamt
European Patent Office
Office européen des brevets

(11) **EP 3 552 745 B1**

(12) **EUROPÄISCHE PATENTSCHRIFT**

(45) Veröffentlichungstag und Bekanntmachung des Hinweises auf die Patenterteilung:
**20.09.2023 Patentblatt 2023/38**

(21) Anmeldenummer: **19166691.6**

(22) Anmeldetag: **02.04.2019**

(51) Internationale Patentklassifikation (IPC):
**B23F 19/10** *(2006.01)*    **B24B 29/00** *(2006.01)*
**B24B 9/00** *(2006.01)*     **B24B 29/04** *(2006.01)*

(52) Gemeinsame Patentklassifikation (CPC):
**B23F 19/108; B24B 9/00; B24B 29/005; B24D 13/10**

(54) **VERFAHREN ZUM ENTGRAT-BÜRSTEN VON ZAHNRÄDERN UND CNC-VERZAHNMASCHINE MIT EINER ENTSPRECHENDEN SOFTWARE ZUM ENTGRAT-BÜRSTEN**

METHOD FOR DEBURRING OF GRINDING GEARS AND CNC MACHINE WITH A CORRESPONDING SOFTWARE FOR DEBURRING

PROCÉDÉ DE BROSSAGE D'ÉBAVURAGE DES ROUES DENTÉES ET MACHINE CNC À TAILLER LES DENTURES DOTÉE D'UN LOGICIEL CORRESPONDANT DESTINÉE AU BROSSAGE D'ÉBAVURAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.04.2018 DE 102018108635**

(43) Veröffentlichungstag der Anmeldung:
**16.10.2019 Patentblatt 2019/42**

(73) Patentinhaber: **Klingelnberg GmbH**
**42499 Hückeswagen (DE)**

(72) Erfinder: **Töpfer, Gary**
**42897 Remscheid (DE)**

(74) Vertreter: **Janke Scholl Patentanwälte PartG mbB**
**Kaiser-Friedrich-Ring 5**
**40545 Düsseldorf (DE)**

(56) Entgegenhaltungen:
**EP-A1- 3 299 105    EP-A1- 3 517 235**
**DE-U1- 9 112 792    DE-U1-202008 008 212**
**US-A- 3 064 290    US-A1- 2017 261 068**

**Beschreibung**

Die vorliegende Erfindung betrifft ein Verfahren zum Entgrat-Bürsten von Zahnrädern, insbesondere von Kegelrädern, gemäß dem Oberbegriff des Anspruchs 1 und eine CNC-Maschine gemäß dem Oberbegriff des Anspruchs 9, wobei ein derartiges Verfahren und eine derartige Maschine aus dem Dokument EP 3 299 105 A1 bekannt sind.

Stand der Technik

Beim Fertigen von Kegelrädern kann an Zahnkanten durch das spanabhebende Verzahnen ein Grat (hier auch als Primärgrat bezeichnet) entstehen. Wegen der Verletzungsgefahr, aber auch wegen der Gefahr des Durchhärtens beim Härten der Kegelräder, werden diese Zahnkanten häufig im Rahmen eines Anfasens/Entgratens durch eine Fase gebrochen.

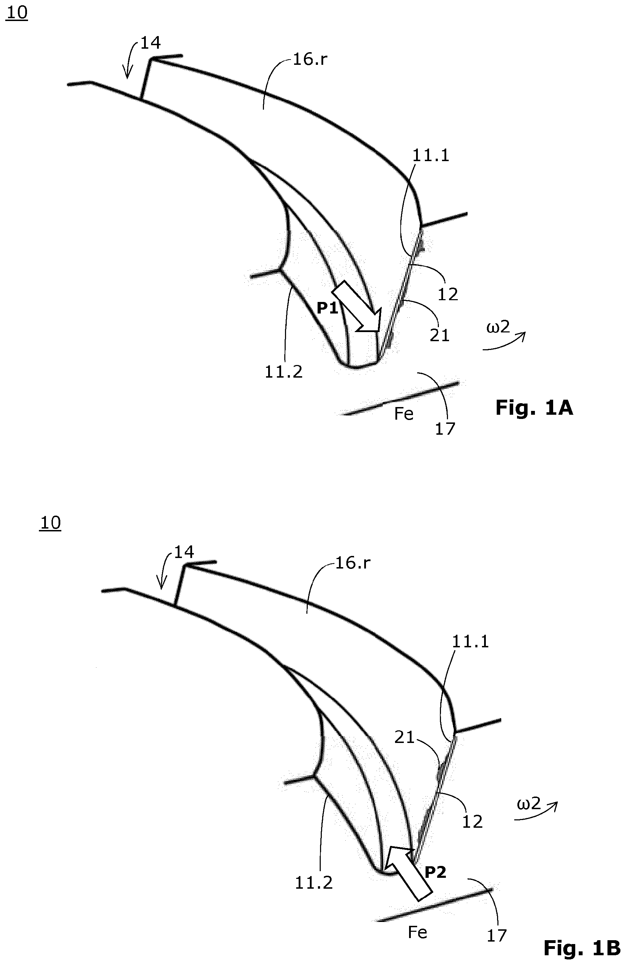

Bei dem erwähnten Entgraten kann, je nach Konstellation, beim Entfernen des Primärgrats durch das Anfasen an den Zahnkanten ein Sekundärgrat entstehen. Falls das Primärentgraten mit einem Entgratwerkzeug erfolgt, dessen Schneid(en) aus einer Zahnlücke kommend nach außen geführt werden (die Bewegungsrichtung wird in Fig. 1A durch den Pfeil P1 symbolisiert), so entsteht der Sekundärgrat 21 außerhalb der Zahnlücke 14, wie in Fig. 1A gezeigt. Falls hingegen das Entgratwerkzeug beim Primärentgraten in eine Zahnlücke 14 hinein geführt wird (die Bewegungsrichtung wird in Fig. 1B durch den Pfeil P2 symbolisiert), so entsteht der Sekundärgrat 21 im Funktionsbereich des Kegelrads 10.

In der Serienfertigung wird daher in den meisten Fällen das Primärentgraten von Innen nach Außen, wie in Fig. 1A durch den Blockpfeil P1 symbolisiert, durchgeführt.

Ein Primärgrat tritt, wie in Fig. 1A schematisch gezeigt, hauptsächlich an der Zahnkante 11.1 der konkaven Flanke 16.r auf, da diese Flanke 16.r im Bereich der Ferse Fe mit der Rückenfläche 17 des Kegelrades 10 in der Regel einen relativ spitzen Winkel bildet. In Fig. 1A ist der Zustand nach dem Anfasen der Zahnkante 11.1 gezeigt. Durch das Anfasen wurde eine Fase 12 erzeugt und der Primärgrat entfernt. Gleichzeitig ist jedoch Sekundärgrat 21 aufgetreten, wie schematisch angedeutet.

In Fig. 1B ist anhand des Kegelrads 10 beispielhaft die Situation nach dem Anfasen der Zahnkante 11.1 von außen nach innen gezeigt. Man kann in Fig. 1B schematisch den Verlauf der Fase 12 erkennen. Wie in Fig. 1B auch zu erkennen ist, hat sich entlang der ersten Fase 12 ein Sekundärgrat 21 gebildet, der in diesem Fall jedoch im Funktionsbereich des Kegelrads 10 liegt.

Sekundärgrat 21 tritt jedoch nicht immer auf. Es zeigen sich hier Zusammenhänge unter anderem mit der Qualität der Schneiden des Entgratwerkzeugs. Solange das Entgratwerkzeug scharfe Schneiden hat, verläuft das Primärentgraten relativ zuverlässig. Mit stumpfer werdenden Schneiden wird das Material des Kegelrads 10 nicht mehr geschnitten sondern verdrängt. In diesem Fall steigt die Tendenz zur Bildung von Sekundärgrat 21. Da die Zahnkanten 11.1, 11.2 der Kegelradzähne 15.r, 15.l z.B. im Bereich der Ferse Fe des Kegelrads 10 meist keinen geraden Verlauf haben, variiert die Dicke der beim Entgraten abzuhebenden Späne. Auch aus diesem Grund können teilweise Sekundärgrate 21 entstehen. Das Dokument EP 3 299 105 A1 beschreibt das Entgraten von Kegelrädern mit einem Entgratmesserkopf, wobei zudem erwähnt wird, dass eine Bürste zum Entgraten verwendet werden kann.

Teilweise kommen Entgratbürsten zum Einsatz, die entweder manuell oder in einer Maschine eingesetzt werden, um etwaige Grate zu entfernen. Eine Entgratbürste für den maschinellen Einsatz hat entweder Kunststoff- oder Metallborsten. Da das maschinelle Entgrat-Bürsten meist mit großer Drehzahl durchgeführt wird und da teilweise große Kräfte an den Kunststoff- oder Metallborsten auftreten, falls diese auf einen Zahn treffen, neigen die Borsten zum Verbiegen oder Abbrechen. Daher müssen solche Entgratbürsten relativ häufig gewechselt werden, um ein zuverlässiges Entfernen von Graten zu gewährleisten.

Es besteht der Bedarf Kegelräder zuverlässig und sicher mit Bürsten zu entgraten. Speziell in der Serienherstellung von Kegelrädern - zum Beispiel im Automobilbau - müssen die Probleme, die sich im Zusammenhang mit dem Einsatz von Entgratbürsten ergeben, vermieden werden.

Andererseits gibt es den Bedarf das Entgraten effizienter zu gestalten.

Von daher liegt der Erfindung die Aufgabe zugrunde, ein Verfahren zum Entgrat-Bürsten von Zahnrädern, insbesondere von Kegelrädern, und eine CNC gesteuerte Maschine mit einer entsprechender Software bereitzustellen, damit das Entgrat-Bürsten mit geringem Aufwand und möglichst effizient erfolgen kann, ohne die Entgratbürste zu zerstören.

Die Aufgaben werden erfindungsgemäss durch eine Verfahren gemäss Patentanspruch 1 und eine CNC gesteuerte Maschine gemäß Anspruch 9 gelöst. Vorteilhafte Ausgestaltungen der Erfindung bilden die Gegenstände der abhängigen Ansprüche.

Erfindungsgemäss wird diese Aufgabe durch ein Verfahren zum Entgrat-Bürsten von Zahnrädern, insbesondere von Kegelrädern gelöst, bei dem eine Entgratbürste eingesetzt wird, die mindestens N=1 Bürstenbüschel umfasst. Jeder dieser mindestens N=1 Bürstenbüschel umspannt einen Winkelbereich, der kleiner ist als 360 Grad. Das Verfahren umfasst die folgenden Schritte:

- Drehantreiben der Entgratbürste um eine (Entgrat-)Spindelachse,
- Drehantreiben eines Zahnrades, respektive eines Kegelrades um eine Werkstückspindelachse, wobei
- das Drehantreiben der Entgratbürste und das Drehantreiben des Zahnrades, respektive des Kegelrades gekoppelt mit einer vorgegebenen Kopplungsübersetzung erfolgt,
- es sich um ein kontinuierliches Verfahren zum Entgrat-Bürsten handelt,
- die Entgratbürste in Bezug zu dem Zahnrad, respektive zu dem Kegelrad eine relative Flugbewegung ausführt,
- die relative Flugbewegung durch eine Hypozykloide oder eine Epizykloide definiert ist, und wobei
- mindestens an einer Zahnkante einer Zahnlücke durch eine Berührung des mindestens N=1 Bürstenbüschels mit der Zahnkante ein Grat entfernt wird.

Erfindungsgemäß wird diese Aufgabe durch eine CNC-Maschine gemäß Anspruch 9 gelöst.

Bei mindestens einem Teil der Ausführungsformen weist die Entgratbürste N=1 Bürstenbüschel und N=1 Zwischenräume auf.

Bei mindestens einem Teil der Ausführungsformen weist die Entgratbürste N=1 Bürstenbüschel und N=1 Platzhalter auf.

Bei mindestens einem Teil der Ausführungsformen führt die relative Flugbewegung des mindestens N=1 Bürstenbüschels in eine Zahnlücke des Zahnrades, respektive des Kegelrades hinein, d.h. das Entgraten wird durch eine relative Flugbewegung von Außen nach Innen durchgeführt.

Bei mindestens einem Teil der Ausführungsformen führt das mindestens N=1 Bürstenbüschel in Bezug zu dem Zahnrad, respektive in Bezug zu dem Kegelrad eine relative Flugbewegung mit einer Bewegungsrichtung aus, die aus der Zahnlücke hinaus führt.

Bei mindestens einem Teil der Ausführungsformen kommt eine hypozykloidische Kopplung mit inverser Kopplungsübersetzung zum Einsatz. Eine solche hypozykloidische Kopplung hat den Vorteil, dass die Flugbewegung des mindestens N=1 Bürstenbüschels eine deutliche Verwindung aufweist. D.h. das Entgraten wird so durchgeführt, dass sich der mindestens N=1 Bürstenbüschel nach dem Entgraten auf einer steilen Flugbahn aus dem (Kollisions-)Bereich des Zahnrades, respektive des Kegelrades herausbewegt.

Bei mindestens einem Teil der Ausführungsformen kommt eine epizykloidische Kopplung mit positiver Kopplungsübersetzung zum Einsatz.

Es kommt eine Kopplung mit einer Kopplungsübersetzung zum Einsatz, die sich aus der Zähnezahl des Kegelrades und der Anzahl N der Bürstenbüschel der Entgratbürste ergibt (mit N=1, 2, 3, 4 usw.).

Bei mindestens einem Teil der Ausführungsformen wird das Entgrat-Bürsten durchgeführt, nachdem das Zahnrad, respektive das Kegelrad durch Fräsen, Schleifen, Stoßen, Schälen, Anfasen oder durch ein anderes spanabhebendes Verfahren bearbeitet wurde.

Es wird gemäß Erfindung bei allen Ausführungsformen eine CNC-Maschine (z.B. eine Kegelrad-Verzahnmaschine oder eine dedizierte Entgrat-Maschine) mit einer Entgratvorrichtung mit einer Entgratspindel und mit einem Softwaremodul, das entsprechend programmiert ist, zum Entgrat-Bürsten eingesetzt.

Es ist ein Vorteil der Erfindung, dass aufgrund der gekoppelten Drehbewegung von Entgratbürste und Zahnrad, respektive Kegelrad die N Bürstenbüschel gezielt und kontrolliert durch die Zahnlücken geführt werden, ohne unkontrolliert mit den Zähnen des Zahnrades, respektive des Kegelrades zu kollidieren.

Ein weiterer Vorteil der Erfindung bestehen darin, dass mit den mittels eines Softwaremodules und einer CNC Steuerung numerisch steuerbaren Achsen (NC-Achsen) einer CNC gesteuerten Maschine (z.B. einer Kegelrad-Verzahnmaschine oder einer dedizierten Entgrat-Maschine) nahezu beliebig geformte Profilkanten von Zahnrädern, speziell von Kegelrädern mit dem/den Bürstenbüschel/n erreichbar sind. Somit kann auch bei einer stark gekrümmten Profilkante ein Entgraten vorgenommen werden, ohne die Entgratbürste zu stark mechanisch zu beanspruchen.

ZEICHNUNGEN

Ausführungsbeispiele der Erfindung werden im Folgenden unter Bezugnahme auf die Zeichnungen näher beschrieben.

**FIG. 1A**   zeigt eine schematische Perspektivansicht eines beispielhaften Kegelrads (hier ein Tellerrad), wobei eine einzelne Zahnlücke angedeutet ist, an deren Zahnkante gemäß Stand der Technik durch Anfasen von Innen nach Außen eine Fase erzeugt wurde, wobei sich im Bereich der Fase Sekundärgrat gebildet hat;

**FIG. 1B**   zeigt eine schematische Perspektivansicht eines beispielhaften Kegelrads (hier ein Tellerrad), wobei eine einzelne Zahnlücke angedeutet ist, an deren Zahnkante gemäß Stand der Technik durch Anfasen von Außen nach Innen eine Fase erzeugt wurde, wobei sich im Bereich der Fase Sekundärgrat gebildet hat;

**FIG. 2A**   zeigt eine schematische Perspektivansicht eines Bereichs einer CNC-gesteuerten Maschine, die hier beispielhaft mit einer N=4 Entgratbürste bestückt ist;

FIG. 2B    zeigt eine schematische Ansicht einer beispielhaften N=4 Entgratbürste;

FIG. 3A    zeigt eine schematische Ansicht einer N=6 Entgratbürste;

FIG. 3B    zeigt eine schematische Ansicht eines Bürstenbüschels einer weiteren Ausführungsform;

FIG. 4    zeigt eine schematische Ansicht einer N=3 Entgratbürste;

FIG. 5    zeigt eine perspektivische Teilansicht einer beispielhaften Verzahnmaschine, die mit einer Entgratvorrichtung und einer Entgratbürste der Erfindung ausgestattet ist.

**Detaillierte Beschreibung**

In den Figuren 1A und 1B, die bereits eingangs beschrieben wurden, sind schematische Perspektivansichten eines Kegelrads 10 gezeigt, wobei anhand dieser beiden Figuren beispielhafte Schritte zweier konventioneller Entgratverfahrens erläutert worden sind. Anhand der Figuren 1A und 1B wurden auch die Elemente und Begriffe definiert, die hierin verwendet werden.

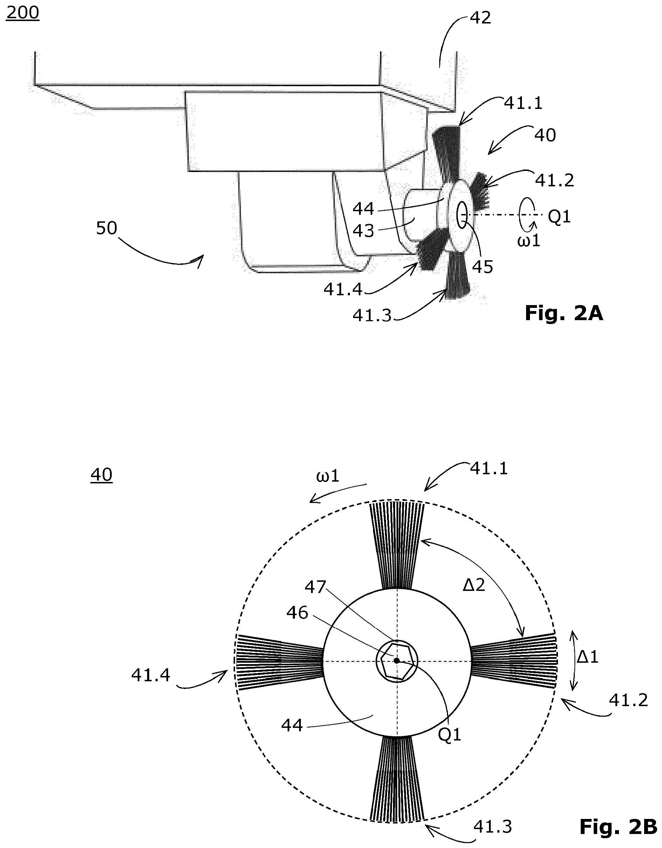

Fig. 2A zeigt eine schematische Perspektivansicht eines Teils einer CNC-gesteuerten Maschine 200, die eine Ausführungsform einer Entgratvorrichtung 50 der Erfindung umfasst. Die gezeigte Entgratvorrichtung 50 ist in einer hängenden Konstellation an einem beweglichen Teil 42 der Maschine 200 angeordnet. Die Entgratvorrichtung 50 umfasst eine (Entgrat)Spindel 43, deren (Entgrat)Spindelachse mit dem Bezugszeichen Q1 versehen ist. Diese (Entgrat)Spindelachse Q1 verläuft im gezeigten Beispiel horizontal. An der (Entgrat)Spindel 43 ist eine Entgratbürste 40 mit N=4 Bürstenbüscheln 41.1, 41.2, 41.3, 41.4 befestigt.

Die Entgratbürste 40 umfasst bei mindestens einem Teil der Ausführungsformen einen zentralen, teller- oder scheibenartigen Grundkörper 44. Der Grundkörper 44 kann z.B. eine zentrale Durchgangsbohrung 45 aufweisen, die dazu auslegt ist die Entgratbürste 40 auf einer Welle der (Entgrat)Spindel 43 aufzustecken. Die Durchgangsbohrung 45 ist in Fig. 2A gezeigt, die eigentlichen Befestigungsmittel wurden jedoch weggelassen, da es zahlreiche verschiedene Befestigungsmöglichkeiten gibt, die hier eingesetzt werden können.

In Fig. 2B ist ein Ausführungsbeispiel gezeigt, bei dem eine Schraube 46 und eine Unterlegscheibe 47 zu erkennen sind, wobei die Schraube 46 in ein Innengewinde einer Welle der (Entgrat)Spindel 43 eingeschraubt wurde.

Der Grundkörper 44 hat bei mindestens einem Teil der Ausführungsformen eine rotationssymmetrische Form (hier die Form eines dünnen Zylinders), an dessen radial nach aussen weisender Mantelfläche gruppen- oder büschelweise Borsten angeordnet sind. Die Zahl N wird hier verwendet, um die Anzahl der Bürstenbüschel 41.N einer Entgratbürste 40 zu definieren. N ist eine ganze Zahl größer gleich 1, d.h. N=1, 2, 3, 4, usw..

Jeder der N=4 Bürstenbüschel 41.N umspannt bei der Ausführungsform der Fig. 2B einen Winkelbereich $\Delta 1$, der kleiner ist als 360 Grad. Im gezeigten Beispiel kann der Winkelbereich $\Delta 1$ wie folgt berechnet werden:

$$\Delta 1 = [360^0 - (N * \Delta 2)] / N$$

Konkret gilt bei der Ausführungsform der Fig. 2B: $\Delta 2 \approx 70^0$ und $\Delta 1 \approx 20^0$.

Die Bürstenbüschel 41.N zeichnen sich dadurch aus, dass die äquidistant zueinander entlang des Umfangs des Grundkörpers 44 angeordnet sind. Wenn ein einzelner Bürstenbüschel 41.1 einen Winkelbereich $\Delta 1$ von z.B. 10 Grad abdeckt, dann decken auch die anderen Bürstenbüschel 41.2, 41.3 und 41.4 einen identischen Winkelbereich von jeweils 10 Grad ab. Der gegenseitige Winkelabstand $\Delta 2$ zweier aufeinander folgender Bürstenbüschel beträgt dann jeweils 80 Grad.

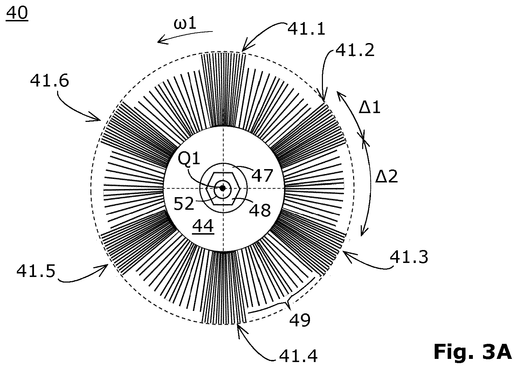

Da es sich bei dem Verfahren der Erfindung zum Entgrat-Bürsten um ein kontinuierliches Verfahren handelt, ist die Einhaltung der Winkelaufteilung (wie beispielsweise anhand der Fig. 2B und 3A gezeigt) wichtig. Bei dem kontinuierlichen Verfahren der Erfindung werden nämlich die Entgratbürste 40 und das zu entgratende Kegelrad-Werkstück 10 gekoppelt drehangetrieben. Diese Kopplung ergibt sich aus der Zähnezahl, respektive der Zahl der Zahnlücken 14, des Kegelrad-Werkstücks 10 und der Anzahl N der Bürstenbüschel 41.N.

Vorzugsweise kommt bei allen Ausführungsformen eine elektronische Kopplung zum Einsatz.

Die Kopplung kann auch durch das Verhältnis des Radius des Rollkreises zum Radius des Grundkreises definiert werden.

Wenn die Entgratbürste 40 z.B. N=1 Bürstenbüschel 41.1 umfasst und sich das Kegelrad-Werkstück 10 mit zehn Zahnlücken 14 mit der Winkelgeschwindigkeit $\omega 2$ um die Werkstückspindelachse B dreht, dann muss die Winkelgeschwindigkeit $\omega 1$ der Entgratbürste 40 zehn mal so groß sein wie die Winkelgeschwindigkeit $\omega 2$, falls das Bürstenbüschel 41.N direkt nacheinander durch eine erste, eine zweite, eine dritte Zahnlücke 14, usw. geführt werden soll. Die Kopplungsübersetzung Ü beträgt in diesem Fall Ü=10.

Es sind aber auch andere Kopplungsübersetzungen Ü möglich, wobei dann das Kegelrad-Werkstück 10 zwei oder mehr als zwei Vollumdrehungen machen muss, bis mit dem N=1 Bürstenbüschel 41.1 die Zahnkanten aller Zahnlücken 14 entgratet wurden. Die Kopplungsübersetzung Ü muss keine ganze Zahl sein und sie kann größer als Null (positive Kopplung) oder kleiner als Null (inverse Kopplung) sein.

Wenn die Entgratbürste 40 mehr als nur ein Bürstenbüschel 41.1 umfasst, d.h. falls N > 1, so kann die Winkelgeschwindigkeit ω1 der Entgratbürste 40 reduziert werden. Falls zum Beispiel mit N=2 Bürstenbüscheln 41.1, 41.2 gearbeitet wird und falls das erste Bürstenbüschel 41.1 durch eine erste, das zweite Bürstenbüschel 41.2 durch eine unmittelbar anschliessende zweite Zahnlücke 14, das erste Bürstenbüschel 41.1 durch eine unmittelbar anschliessende dritte Zahnlücke 14, usw. geführt werden sollen, so beträgt die Kopplungsübersetzung Ü in diesem Fall Ü=5.

Es kommt bei mindestens einem Teil der Ausführungsformen eine inverse Kopplungsübersetzung zum Einsatz und die Spur (hier auch als Flugbahn bezeichnet), die ein Bürstenbüschel 41.N einer Entgratbürste 40 im 3-dimensionalen Raum relativ zum Kegelrad-Werkstück 10 beschreibt, folgt einer Hypozykloide.

Es kommt bei mindestens einem Teil der Ausführungsformen eine positive Kopplungsübersetzung zum Einsatz und die Flugbahn, die ein Bürstenbüschel 41.N einer Entgratbürste 40 im 3-dimensionalen Raum relativ zum Kegelrad-Werkstück 10 beschreibt, folgt einer Epizykloide.

Die inverse Kopplungsübersetzung wird bei einem Teil der Ausführungsformen so gewählt, dass ein erstes Bürstenbüschel 41.1 der Entgratbürste 40 z.B. von außen nach innen durch eine erste Zahnlücke 14 des Kegelrads 10 bewegt wird. Ein zweites Bürstenbüschel 41.1 der Entgratbürste 40 wird von außen nach innen z.B. durch die nächste Zahnlücke 14 des Kegelrads 10 bewegt, usw.

Bei mindestens einem Teil der Ausführungsformen stehen die Bürstenbüschel 41.N auf einem Kreis am Umfang der Entgratbürste 40.

Um die Bewegungsabläufe und die Zusammenhänge besser verdeutlichen zu können, sind die Drehrichtungen der Entgratbürste 40 und des Kegelrades 10 durch die Pfeilbögen ω1 und ω2 angedeutet.

Die relative Orientierung der beiden Drehrichtungen ω1 und ω2 wird hier als inverse Kopplung bezeichnet, wenn die Drehrichtung ω2 in Bezug auf die Drehrichtung ω1 davoneilt.

Wenn z.B. in Fig. 1B das Entgrat-Bürsten mit einer inversen Kopplung der beiden Drehrichtungen ω1 und ω2 vorgenommen wird, dann bewegen sich die Bürstenbüschel 41.N in Richtung der Pfeiles P2, während sich das Kegelrad 10 in Gegenuhrzeigersinn wegdreht, wie durch den Pfeilbogen ω2 in Fig. 1B angedeutet.

Es ist ein Vorteil der inversen Kopplung, dass in dem Fall des Nacheilens der Entgratbürste 40 die Borsten der Entgratbürste 40 nicht zu stark mit dem Material/den Zähnen des Kegelrades 10 kollidieren. Mit anderen Worten, falls ein Bürstenbüschel 41.N, das in Richtung des Pfeiles P2 in Richtung einer Zahnlücke 14 bewegt wird, zu spät kommen sollte, weil die Kopplungsübersetzung Ü verschoben haben sollte (z.B. aufgrund einer Krafteinwirkung auf einen der Antriebe), so hat sich die Kante 11.1 des Kegelrades 10 bereits ein kleines Stück weg gedreht.

Wenn ein Vorgang zum Entgrat-Bürsten von Innen nach Außen mit inverser Kopplung gewählt wird, dann werden die Bürstenbüschel 41.N aus der Zahnlücke 14 heraus nach außen entlang einer hypozykloiden Flugbahn geführt. Wenn man die Bewegungsrichtung ω2 der Fig. 1B auch in Fig. 1A beibehält, dann muss die Bewegungsrichtung ω1 umgekehrt werden, um weiterhin eine inverse Kopplung zu erreichen. In diesem Fall zeigt der Pfeil P1 daher aus der Zahnlücke 14 heraus.

Falls eine positive Kopplung erwünscht ist, muss in Fig. 1A oder in Fig. 1B z.B. die Bewegungsrichtung ω2 umgekehrt werden.

Da beim Verfahren der Erfindung mit einer festgelegten Kopplungsübersetzung Ü gearbeitet wird, ist es wichtig, dass die Bürstenbüschel 41.N der Entgratbürste 40 möglichst formhaltig sind. Wenn sich durch starke Beanspruchung die Borsten der Bürstenbüschel 41.N verbiegen, so kann es quasi zu einem Nacheilen der Bürstenbüschel 41.N kommen.

Bei einer inversen Kopplung stellt das Nacheilen der (Entgrat)Spindelachse Q1 gegenüber der Werkstückspindelachse B kein großes Problem dar, da die zu entgratende Zahnkante (z.B. die Zahnkante 11.1 in Fig. 1B) davon eilt. Bei einem Nacheilen der Bürstenbüschel 41.N durch Verbiegen der Borsten, ist ein Verfahren mit inverser Kopplung entsprechend vorteilhaft, da auch hier die zu entgratende Zahnkante (z.B. die Zahnkante 11.1 in Fig. 1B) davon eilt und dadurch zu starke Kollisionen vermieden werden.

Bei einer positiven Kopplung hingegen kommt es beim Nacheilen der (Entgrat)Spindelachse Q1 und/oder beim Nacheilen der Bürstenbüschel 41.N zu einer deutlicheren Kollision der Bürstenbüschel 41.N mit den Zähnen des Kegelrad-Werkstücks 10, da die zu entgratende Zahnkante in das Bürstenbüschel 41.N hinein läuft (bei der Darstellung der Fig. 1B muß die Bewegungsrichtung ω2 umgekehrt werden, wenn eine positive Kopplung erwünscht ist).

Um Probleme mit sich verbiegenden Borsten zu vermeiden, kommen mindestens bei einem Teil der Ausführungsformen Entgratbürsten 40 zum Einsatz, bei denen die Zwischenräume oder Winkelsegmente zwischen den Bürstenbüscheln 41.N z.B. durch kurze, deutlich stabilere Borsten, Lappen, Platten oder andere Platzhalter 49 besetzt sind, wie anhand eines Beispiels in Fig. 3A gezeigt. Die Entgratbürste 40 der Fig. 3A umfasst N=6 Bürstenbüschel 41.1, 41.2, 41.3, 41.4, 41.5, 41.6 die einen gegenseitigen Winkelabstand Δ2 von ca. 40 Grad haben. Jeder der Bürstenbüschel 41.N deckt hier einen Winkelbereich Δ1 von ca. 10 Grad ab. Die Zwischenräume oder Winkelsegmente haben jeweils einen Winkel Δ2 von ca. 40 Grad, d.h. die Platzhalter 49 überdecken in etwa einen Winkelbereich von ca. 40 Grad.

Anders als in Fig. 2B, kommen in Fig. 3A eine Unterlegscheibe 47 und eine Mutter 48 zum Einsatz, wobei die Mutter auf das Aussengewinde eines Gewindestiftes 52 geschraubt wurde.

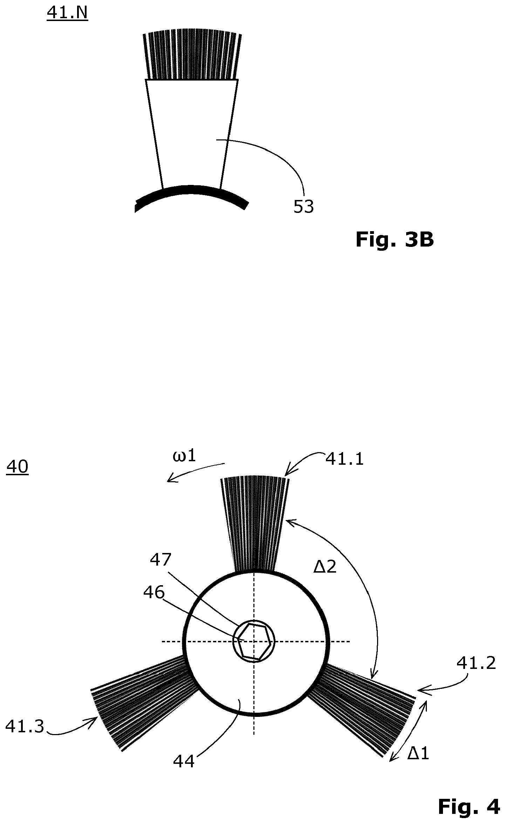

Um Probleme mit sich verbiegenden Borsten zu vermeiden, kommen mindestens bei einem Teil der Ausführungsformen Entgratbürsten 40 zum Einsatz, bei denen die Bürstenbüschel 41.N mit einer Manschette oder Ummantelung 53 versehen sind, wie in Fig. 3B anhand eines einzelnen Bürstenbüschels 41.N gezeigt. Die Manschette oder Ummantelung 53 verhindert ein frühzeitiges Verbiegen der Borsten.

Um Probleme mit sich verbiegenden Borsten zu vermeiden, kommen mindestens bei einem Teil der Ausführungsformen Entgratbürsten 40 zum Einsatz, deren Bürstenbüschel 41.N relativ kurze Borsten aufweisen, wie anhand eines Beispiels in Fig. 4 gezeigt. Die Entgratbürste 40 der Fig. 4 umfasst N=3 Bürstenbüschel 41.1, 41.2, 41.3, die einen gegenseitigen Winkelabstand $\Delta 2$ von ca. 110 Grad haben. Jeder der Bürstenbüschel 41.N deckt hier einen Winkelbereich $\Delta 1$ von ca. 10 Grad ab.

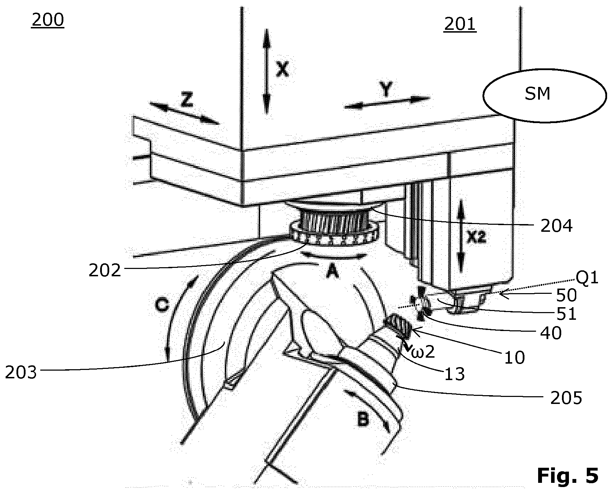

In einer CNC-Verzahnmaschine 200, wie z.B. in Fig. 5 gezeigt, werden die erforderlichen Relativbewegungen beispielsweise dadurch erzeugt, dass der Mittelpunkt des Rollkreises im Raum fixiert ist, während sich der Grundkreis dreht. Der Rollkreis rollt im Inneren des Grundkreises ab, um eine Hypozykloide relativ zu dem sich drehenden Kegelrad 10 zu erzeugen. Wenn der Rollkreis rollt außen am Grundkreises abrollt, so wird eine Epizykloide relativ zu dem sich drehenden Kegelrad 10 erzeugt.

Bei mindestens einem Teil der Ausführungsformen ist die CNC-Maschine 200 so ausgelegt, oder mittels einer Software SM so programmiert, dass entweder eine inverse Kopplung oder eine positive (nicht inverse) Kopplung für das Entgrat-Bürsten vorgegeben werden kann.

Die Kopplungsübersetzung wird so gewählt, dass es jeweils nur im Bereich der zu entgratenden Zahnkanten (11.1 oder 11.2) zwischen der Entgratbürste 40 und dem Kegelrad 10 zu einer kurzzeitigen Berührung kommt. Die Kopplungsübersetzung Ü ist durch das Verhältnis der beiden Radien des Grundkreises und des Rollkreises definiert.

Fig. 5 zeigt in perspektivischer Darstellung den Grundaufbau einer CNC-Verzahnmaschine 200, die zum Verzahnen und zum Entgraten-Bürsten von Kegelrädern 10 ausgelegt ist. Eine solche Maschine 200 ist erfindungsgemäß so ausgelegt oder umgerüstet, dass das Entgraten-Bürsten des Kegelrades 10 mittels einer Entgratvorrichtung 50 vorgenommen werden kann, die eine Entgratbürste 40 an einer Entgratspindel 51 trägt. Hier kommt eine Entgratbürste 40 mit N=4 Bürstenbüscheln 41.N zu Einsatz (ähnlich wie in Fig. 2A oder 2B gezeigt).

Das Prinzip der Erfindung lässt sich jedoch auch in anderen CNC-Verzahnmaschinen 200 oder in Entgratmaschinen anwenden, die mit einer Entgratvorrichtung 50, wie beispielsweise in Fig. 2A oder in Fig. 5 gezeigt, ausgestattet sind.

Die CNC-Verzahnmaschine 200 kann wie folgt aufgebaut sein. Die Maschine 200 kann ein Maschinengehäuse 201 umfassen, das es ermöglicht eine Werkzeugspindel 204 entlang einer Koordinatenachse X (1. Achse) linear vertikal, entlang einer Koordinatenachse Y (2. Achse) linear horizontal sowie entlang einer Koordinatenachse Z (3. Achse) linear horizontal zu führen. Die genannte Werkzeugspindel 204 kann beispielsweise hängend an der Maschine 200 angeordnet sein, wobei die entsprechende Werkzeugspindelachse A (4. Achse) vertikal im Raum hängt. Die Werkzeugspindel 204 trägt ein Werkzeug, hier beispielshalber einen Messerkopf 202 mit mehreren Stabmessern (die Stabmesser sind nicht zu sehen).

An der Maschine 200 kann beispielsweise eine erste Schwenkvorrichtung 203 vorgesehen sein, die eine Werkstückspindel 205 mit einer Werkstückspindelachse B (5. Achse) trägt. Die Werkstückspindel 205 samt Werkstückspindelachse B kann um eine Schwenkachse (C-Achse; 6. Achse) der ersten Schwenkvorrichtung 203 geschwenkt werden. Die Schwenkachse C steht senkrecht zur Werkzeugspindelachse A und verläuft hier horizontal im Raum. Wenn man von vorne in Richtung der Schwenkachse C auf die Maschine 200 der Fig. 5 schaut, dann steht die Werkstückspindel 205 in dem gezeigten Moment schräg in einer 14 Uhr-Stellung. In dieser Stellung kann z.B. eine Entgratbürste 40 der Entgratvorrichtung 50 mit dem Kegelrad-Werkstück 10 in Wechselwirkung gebracht werden.

Die Werkstückspindel 205 trägt im gezeigten Beispiel ein bogenverzahntes Kegelradritzel als Werkstück 10. Eine Spanvorrichtung 13 kann zum Verbinden des Kegelrades 10 mit der Werkstückspindel 205 dienen.

Die erste Schwenkvorrichtung 203 kann beispielweise so um die C-Achse schwenkbar gelagert sein, dass das Kegelrad 10 in eine Bearbeitungsposition unterhalb des Verzahnwerkzeugs 202 schwenkbar ist. Außerdem kann das Kegelrad 10 durch die erste Schwenkvorrichtung 203 zum Entgrat-Bürsten in eine geeignete Stellung relativ zur Entgratbürste 40 der Entgratvorrichtung 50 überführt werden.

Außerdem kann die Entgratvorrichtung 50 zum Beispiel mit Zustellvorrichtung(en) versehen sein, um die Entgratbürste 40 relativ zum Kegelrad 10 bewegen und mit diesem in Wechselwirkung bringen zu können.

Die Entgratvorrichtung 50 der Erfindung, die eine Entgratbürste 40 umfasst, kann z.B. eine Linearachse X2 (7. Achse) und eine Entgratspindelachse Q1 (8. Achse) umfassen, wie in Fig. 5 gezeigt. Wichtig ist, dass mindestens die Entgratspindelachse Q1 als NC-Achse ausgelegt ist, deren Drehbewegung $\omega 1$ elektronisch mit der Drehbewegung $\omega 2$ der Werkstückspindelachse B gekoppelt werden kann.

Die Maschine 200 ist so ausgelegt, dass bei allen Ausführungsformen das Kegelrad 10 und die Entgratbürste 40 entweder positiv gekoppelt oder invers gekoppelt drehangetrieben werden können, wobei diese Kopplung durch eine Kopplungsübersetzung Ü definiert ist.

Bei mindestens einem Teil der Ausführungsformen ist die Maschine 200 so ausgelegt, dass entweder eine positive Kopplung oder eine inverse Kopplung ausgewählt werden kann. In diesem Fall ist die Maschine 200 dazu ausgelegt beide Kopplungsformen zu unterstützen.

Unter Einsatz einer oder mehrerer der genannten Achsen, kann die Entgratbürste 40 relativ zum Kegelrad 10 in eine für das Entgrat-Bürsten geeignete Ausgangsposition gebracht werden.

Dann werden das Kegelrad 10 um die Werkstückspindelachse B und die Entgratbürste 40 um die Entgratspindelachse Q1 gekoppelt drehangetrieben und relativ zueinander bewegt. In einem kontinuierlichen Verfahren führen die Borsten der Entgratbürste 40 an den vorbestimmten Kanten 11.1 und/oder 11.2 des Kegelrads 10 entsprechende Entgratbewegungen von Außen nach Innen oder von Innen nach Außen aus.

Um das Entgrat-Bürsten im kontinuierlichen Verfahren realisieren zu können, werden Kegelrad-Verzahnmaschinen 200 mit mindestens sechs numerisch gesteuerten Achsen, wie beispielhaft in den Fig. 5 gezeigt, bevorzugt.

Es können jedoch auch andere CNC-Kegelrad-Verzahnmaschinen 200 gemäss Erfindung umgerüstet oder ausgestattet werden, wobei Maschinen 200 mit sieben, acht oder neun numerisch gesteuerten Achsen bevorzugt sind, wie bereits anhand der Fig. 5 erläutert wurde.

Die Entgratvorrichtung 50 umfasst bei allen Ausführungsformen eine Entgratspindel 51 mit der bereits erwähnten Entgratspindelachse Q1, die hier im gezeigten Beispiel eine horizontale Orientierung hat. An der Entgratspindel 51 ist eine Entgratbürste 40 befestigt, wie in Fig. 5 gezeigt. Bei der in Fig. 5 gezeigten Entgratbürste 40 handelt es sich konkret um eine Entgratbürste 40, die mit N=4 Bürstenbüscheln 41.N so bestückt ist, dass diese radial aus dem Umfang der Entgratbürste 40 heraus ragen.

Numerisch steuerbare Achsen sind in diesem Zusammenhang Achsen, die über eine programmierbare Steuerung ansteuerbar sind. Die numerisch steuerbaren Achsen sind so ausgebildet und angeordnet, dass durch das Verstellen mindestens einer der Achsen die Werkstückspindel 205 samt des Kegelrads 10 relativ zu der Entgratbürste 40 so bewegbar ist, dass die Bürstenbüschel 41.N bei gleichzeitigem gekoppeltem Rotieren der Werkstückspindel 205 um die Werkstückspindelachse B und der Entgratbürste 40 um die Entgratspindelachse Q1 nacheinander eine Entgratungsbewegung in Bezug auf die vorgegebenen Zahnkanten 11.1, 11.2 des Kegelrads 10 ausführen.

Wie in Fig. 5 angedeutet, kann die Entgratspindelachse Q1 der Entgratvorrichtung 50 zum Beispiel parallel zur Y-Achse verlaufen. Es sind aber andere Achskonstellationen möglich.

Gemäss Erfindung kommen vorzugsweise bei allen Ausführungsformen eine oder mehrere der numerisch gesteuerten Achsen zum Einsatz, um die Bürstenbüschel 41.N des Werkzeugs 40 relativ zu dem Werkstück 10 zu bewegen.

Da sich das Kegelrad 10 mit einer vorgegebenen ersten Winkelgeschwindigkeit ω2 um die Werkstückachse B und die Entgratbürste 40 mit einer zweiten Winkelgeschwindigkeit ω1 um die Entgratspindelachse Q1 dreht und da die beiden Drehbewegungen (elektronisch) gekoppelt gleichläufig oder gegenläufig erfolgen, ergeben sich für die Bürstenbüschel 41.N komplexe schraubenförmige Flugbahnen im 3-dimensionalen Raum.

Bezugszeichen:

| | |
|---|---|
| Zahnrad / Zahnrad-Werkstück / Kegelrad / Kegelrad-Werkstück | 10 |
| erste Zahnkante / erste Profilkante | 11.1 |
| zweite Zahnkante / zweite Profilkante | 11.2 |
| erste Fase(n) | 12 |
| Spanvorrichtung | 13 |
| Zahnlücke | 14 |
| konkave Zahnflanke | 16.r |
| Kegelstumpfmantelfläche / Rückenfläche | 17 |
| | |
| Sekundärgrat(e) | 21 |
| | |
| Entgratbürste | 40 |
| Bürstenbüschel | 41.1, 41.2, 41.3, 41.4, 41.N |

(fortgesetzt)

| Teil | 42 |
|---|---|
| (Entgrat)Spindel | 43 |
| Grundkörper | 44 |
| Durchgangsbohrung | 45 |
| Schraube | 46 |
| Unterlegscheibe | 47 |
| Mutter | 48 |
| Platzhalter | 49 |
| | |
| Entgratvorrichtung | 50 |
| Entgratspindel/Grundhalter | 51 |
| Gewindestift | 52 |
| Manschette / Ummantelung | 53 |
| | |
| (Kegelrad-)Verzahnmaschine / CNC-Verzahnmaschine / Entgratmaschine | 200 |
| Maschinengehäuse | 201 |
| (Verzahn-)Werkzeug / Messerkopf | 202 |
| Schwenkvorrichtung | 203 |
| Werkzeugspindel | 204 |
| Werkstückspindel | 205 |
| | |
| Werkzeugspindelachse | A |
| Werkstückspindelachse | B |
| Schwenkachse/Drehachse | C |
| Winkelbereich | $\Delta 1, \Delta 1^*$ |
| Winkelabstand | $\Delta 2, \Delta 2^*$ |
| Kegelradferse/Ferse | Fe |
| ganze Zahl | N |
| Bewegungsrichtung | P1, P2 |
| (Entgrat)Spindelachse | Q1 |
| Software(modul) | SM |
| Drehbewegungen | $\omega 1, \omega 2$ |
| Koordinatenachse / Linearachse | X |
| Koordinatenachse / Linearachse | X2 |
| Koordinatenachse / Linearachse | Y |
| Koordinatenachse / Linearachse | Z |
| Kopplungsübersetzung | Ü |

EP 3 552 745 B1

**Patentansprüche**

1. Verfahren zum Entgraten von Zahnrädern, mit einer Entgratbürste (40), **dadurch gekennzeichnet, dass** die Entgratbürste (40) mindestens N=1 Bürstenbüschel (41.N), umfasst, wobei jeder dieser mindestens N=1 Bürstenbüschel (41.N) einen Winkelbereich umspannt, der kleiner ist als 360 Grad, wobei das Verfahren die folgenden Schritte umfasst

   - Drehantreiben der Entgratbürste (40) um eine Spindelachse (Q1),
   - Drehantreiben eines Zahnrades um eine Werkstückspindelachse (B), wobei
   - das Drehantreiben der Entgratbürste (40) und das Drehantreiben des Zahnrades gekoppelt mit einer Kopplungsübersetzung (Ü) erfolgt,
   - es sich um ein kontinuierliches Verfahren zum Entgraten handelt, bei dem das mindestens N=1 Bürstenbüschel (41.N) in Bezug zu dem Zahnrad eine relative Flugbewegung ausführt,
   - die relative Flugbewegung durch eine Hypozykloide oder eine Epizykloide definiert ist, und wobei
   - mindestens an einer Zahnkante (11.1, 11.2) einer Zahnlücke (14) durch eine Berührung des mindestens N=1 Bürstenbüschels (41.N) mit der Zahnkante (11.1, 11.2) ein Grat entfernt wird.

2. Verfahren nach Anspruch 1, **dadurch gekennzeichnet, dass** die relative Flugbewegung des mindestens N=1 Bürstenbüschels (41.N) in die Zahnlücke (14) hinein führt oder aus der Zahnlücke (14) hinaus führt.

3. Verfahren nach Anspruch 1 oder 2, **dadurch gekennzeichnet, dass** es sich bei der Kopplungsübersetzung (Ü) um eine inverse Kopplungsübersetzung (Ü) handelt und dass die relative Flugbewegung durch eine Hypozykloide definiert ist.

4. Verfahren nach Anspruch 1 oder 2, **dadurch gekennzeichnet, dass** es sich bei der Kopplungsübersetzung (Ü) um eine positive Kopplungsübersetzung (Ü) handelt und dass die relative Flugbewegung durch eine Epizykloide definiert ist.

5. Verfahren nach einem der Ansprüche 1 bis 4, **dadurch gekennzeichnet, dass** sich die Kopplungsübersetzung (Ü) durch die Zähnezahl oder die Anzahl der Zahnlücken (14) des Kegelrades (10) und die Anzahl N der Bürstenbüschel (41.N) definiert ist.

6. Verfahren nach einem der Ansprüche 1 bis 3, **dadurch gekennzeichnet, dass** die relative Flugbewegung so gerichtet ist, dass sich die Zahnkante (11.1, 11.2) nach der Berührung relativ zu dem mindestens N=1 Bürstenbüschel (41.N) wegbewegt.

7. Verfahren nach einem der Ansprüche 1 bis 4, **dadurch gekennzeichnet, dass** vor dem Entgraten eine Kopplungsübersetzung (Ü) auswählbar oder vorgebbar ist.

8. Verfahren nach einem der Ansprüche 1 bis 7, **dadurch gekennzeichnet, dass** die Entgratbürste (40) N=1 Bürstenbüschel (41.N) und N=1 Zwischenräume aufweist.

9. CNC-Maschine (200) die mindestens vier NC-Achsen (X, Y, Z, C) sowie eine Werkstückspindel (205) mit Werkstückspindelachse (B) zum Aufnehmen und Drehantreiben eines Zahnrad-Werkstücks (10), und eine Entgratvorrichtung (50) mit einer Entgratspindel (51), die eine Spindelachse (Q1) zum Aufnehmen und Drehantreiben einer Entgratbürste (40) aufweist, umfasst, wobei die Entgratbürste (40) an der Entgratspindel (51) befestigt ist, und wobei die Werkstückspindelachse (B) und die Spindelachse (Q1) NC-Achsen sind, die elektronisch miteinander koppelbar sind, **dadurch gekennzeichnet, dass** die Entgratbürste (40) mindestens N=1 Bürstenbüschel (41.N), umfasst, wobei jeder dieser mindestens N=1 Bürstenbüschel (41.N) einen Winkelbereich umspannt, der kleiner ist als 360 Grad, wobei die CNC-Maschine (200) ein Softwaremodul (SM) umfasst, das zum Auswählen oder Vorgeben einer Kopplungsübersetzung (Ü) für das elektronische Koppeln ausgelegt ist und dass das Softwaremodul (SM) zum Ausführen des Verfahrens nach einem der Ansprüche 1 bis 8 ausgelegt ist.

10. CNC-Maschine (200) nach Anspruch 9, **dadurch gekennzeichnet, dass** das Softwaremodul (SM) dazu auslegt ist eine inverse Kopplungsübersetzung (Ü) mit hypozykloider Flugbahn oder eine positive Kopplungsübersetzung (Ü) mit epizykloider Flugbahn vorzugeben.

**Claims**

1. A method for deburring gear wheels using a deburring brush (40), **characterized in that** the deburring brush (40) comprises at least N=1 brush bundles (41.N), wherein each of these at least N=1 brush bundles (41.N) spans an angle range which is less than 360°, the method having the following steps:

   - rotationally driving the deburring brush (40) about a spindle axis (Q1),
   - rotationally driving a gear wheel about a workpiece spindle axis (B), wherein
   - the rotational driving of the deburring brush (40) and the rotational driving of the gear wheel take place in a coupled manner with a coupling transmission ratio (Ü),
   - it is a continuous method for deburring, in which the at least N=1 brush bundle (41.N) executes a relative flight movement in relation to the gear wheel,
   - the relative flight movement is defined by a hypocycloid or an epicycloid, and wherein
   - a burr is removed at least on one tooth edge (11.1, 11.2) of a tooth gap (14) by contact of the at least N=1 brush bundle (41.N) with the tooth edge (11.1, 11.2).

2. The method according to claim 1, **characterized in that** the relative flight movement of the at least N=1 brush bundle (41.N) leads into the tooth gap (14) or leads out of the tooth gap (14).

3. The method according to claim 1 or 2, **characterized in that** the coupling transmission ratio (Ü) is an inverse coupling transmission ratio (Ü), and the relative flight movement is defined by a hypocycloid.

4. The method according to claim 1 or 2, **characterized in that** the coupling transmission ratio (Ü) is a positive coupling transmission ratio (Ü), and the relative flight movement is defined by an epicycloid.

5. The method according to any one of claims 1 to 4, **characterized in that** the coupling transmission ratio (Ü) is defined by the number of teeth or the number of tooth gaps (14) of the bevel gear (10) and the number N of the brush bundles (41.N).

6. The method according to any one of claims 1 to 3, **characterized in that** the relative flight movement is oriented so that the tooth edge (11.1, 11.2) moves away in relation to the at least one N = 1 brush bundle (41.N) after the contact.

7. The method according to any one of claims 1 to 4, **characterized in that** a coupling transmission ratio (Ü) can be selected or specified before the deburring.

8. The method according to any one of claims 1 to 7, **characterized in that** the deburring brush (40) has N=1 brush bundles (41.N) and N=1 intermediate spaces.

9. A CNC machine (200), which comprises at least four NC axes (X, Y, Z, C) and a workpiece spindle (205) having workpiece spindle axis (B) for accommodating and rotationally driving a gear wheel workpiece (10) and a deburring device (50), which has a spindle axis (Q1) accommodating and rotationally driving a deburring brush (40), wherein the deburring brush (40) is mounted to the spindle axis (Q1) and wherein the spindle axis (Q1) are NC axes which can be electronically coupled to one another, **characterized in that** deburring brush (40) comprises at least N=1 brush bundles (41.N), wherein each of these at least N=1 brush bundles (41.N) spans an angle range which is less than 360°, wherein the CNC machine (200) comprises a software module (SM), which is designed to select or specify a coupling transmission ratio (Ü) for the electronic coupling and that the software module (SM) is designed to execute the method according to any one of claims 1 to 8.

10. The CNC gear cutting machine (200) according to claim 9, **characterized in that** the software module (SM) is designed to specify an inverse coupling transmission ratio (Ü) having a hypocycloid flight path or a positive coupling.

**Revendications**

1. Procédé d'ébavurage de roues dentées, comprenant une brosse d'ébavurage (40), **caractérisé en ce que** la brosse d'ébavurage (40) comprend au moins N=1 touffes de brosses (41.N), chacune de ces au moins N=1 touffes de brosses (41.N) couvrant une plage angulaire qui est inférieure à 360 degrés, le procédé comprenant les étapes suivantes

- entraînement en rotation de la brosse d'ébavurage (40) autour d'un axe de broche (Q1),
- entraînement en rotation d'une roue dentée autour d'un axe de broche porte-pièce à usiner (B), dans lequel
- l'entraînement en rotation de la brosse d'ébavurage (40) et l'entraînement en rotation de la roue dentée s'effectuent de manière couplée avec un rapport de couplage (Ü),
- il s'agit d'un procédé d'ébavurage continu, dans lequel l'au moins N=1 touffe de brosses (41.N), effectue un mouvement de vol relatif par rapport à la roue dentée,
- le mouvement de vol relatif est défini par une hypocycloïde ou une épicycloïde, et dans lequel
- une bavure est éliminée au moins sur un bord de dent (11.1, 11.2) d'un entredent (14) par un contact de l'au moins N=1 touffe de brosse (41.N) avec le bord de dent (11.1, 11.2).

2. Procédé selon la revendication 1, **caractérisé en ce que** le mouvement de vol relatif de la touffe de brosse (41.N) au moins N=1 conduit dans l'entredent (14) ou conduit hors de l'entredent (14).

3. Procédé selon la revendication 1 ou 2, **caractérisé en ce que** le rapport de couplage (Ü) est un rapport de couplage inverse (Ü) et **en ce que** le mouvement de vol relatif est défini par une hypocycloïde.

4. Procédé selon la revendication 1 ou la revendication 2, **caractérisé en ce que** le rapport de couplage (Ü) est un rapport de couplage positif (Ü) et **en ce que** le mouvement de vol relatif est défini par une épicycloïde.

5. Procédé selon l'une des revendications 1 à 4, **caractérisé en ce que** le rapport de couplage (Ü) est défini par le nombre de dents ou le nombre d'entredents (14) de la roue conique (10) et le nombre N de touffes de brosses (41.N).

6. Procédé selon l'une des revendications 1 à 3, **caractérisé en ce que** le mouvement de vol relatif est orienté de telle sorte qu'après le contact, le bord de la dent (11.1, 11.2) s'éloigne par rapport à l'au moins N=1 touffe de brosses (41.N).

7. Procédé selon l'une des revendications 1 à 4, **caractérisé en ce qu'**un rapport de couplage (Ü) peut être sélectionné ou prédéfini avant l'ébavurage.

8. Procédé selon l'une des revendications 1 à 7, **caractérisé en ce que** la brosse d'ébavurage (40) présente N=1 touffes de brosses (41.N) et N=1 espaces intermédiaires.

9. Machine à commande numérique (200) comprenant au moins quatre axes de commande numérique (X, Y, Z, C) ainsi qu'une broche porte-pièce (205) avec un axe de broche porte-pièce (B) pour recevoir et entraîner en rotation une roue dentée (10) à traiter, et un dispositif d'ébavurage (50) avec une broche d'ébavurage (51) présentant un axe de broche (Q1) pour recevoir et entraîner en rotation une brosse d'ébavurage (40), la brosse d'ébavurage (40) étant fixée à la broche d'ébavurage (51), l'axe de broche porte-pièce (B) et l'axe de broche (Q1) étant des axes de commande numérique qui peuvent être couplés électroniquement l'un à l'autre, **caractérisée en ce que** la brosse d'ébavurage (40) comprend au moins N=1 touffes de brosses (41.N), chacune de ces au moins N=1 touffes de brosses (41.N) couvrant une plage angulaire inférieure à 360 degrés, la machine à commande numérique (200) comprenant un module logiciel (SM) conçu pour sélectionner ou prédéfinir un rapport de couplage (Ü) pour le couplage électronique, et **en ce que** le module logiciel (SM) est adapté pour mettre en oeuvre le procédé selon l'une des revendications 1 à 8.

10. Machine à commande numérique (200) selon la revendication 9, **caractérisée en ce que** le module logiciel (SM) est adapté pour prédéfinir un rapport de couplage inverse (Ü) avec une trajectoire hypocycloïde ou un rapport de couplage positif (Ü) avec une trajectoire épicycloïde.

Fig. 1A

Fig. 1B

200

42

41.1

40

41.2

44

43

Q1

ω1

50

41.4

45

41.3

**Fig. 2A**

40

ω1

41.1

47

46

Δ2

Δ1

41.4

41.2

44

Q1

41.3

**Fig. 2B**

Fig. 3A

41.N

53

**Fig. 3B**

40

ω1

41.1

47

46

Δ2

41.2

41.3

44

Δ1

**Fig. 4**

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3299105 A1